# EUROPEAN PATENT SPECIFICATION

(11) **EP 3 327 918 B1**
(45) Date of publication and mention of the grant of the patent: **09.09.2020**
(21) Application number: 15898883.2
(22) Date of filing: 17.07.2015
(51) Int. Cl.: H02M 7/5387, H02M 7/5395, H02M 7/48, H02P 27/08, H02P 23/28, H02P 29/50

(54) **POWER CONVERSION DEVICE AND METHOD FOR REDUCING OUTPUT CURRENT NOISE THEREFROM**
STROMUMWANDLUNGSVORRICHTUNG UND VERFAHREN ZUR REDUZIERUNG DES AUSGANGSSTROMRAUSCHENS DAVON
DISPOSITIF DE CONVERSION DE PUISSANCE ET PROCÉDÉ DE RÉDUCTION DU BRUIT DE COURANT DE SORTIE DE CELUI-CI

(43) Date of publication of application: 30.05.2018
(73) Proprietor: Hitachi Industrial Equipment Systems Co., Ltd., Tokyo 101-0022 (JP)
(72) Inventor: ARAO Yusuke, Tokyo 101-0022 (JP)
(74) Representative: Strehl Schübel-Hopf & Partner
(86) International application number: PCT/JP2015/070616
(87) International publication number: WO 2017/013723

(56) References cited:
- EP-A2- 0 413 966
- EP-A2- 1 850 465
- EP-A2- 1 914 874
- EP-A2- 2 043 240
- JP-A- H0 947 026
- JP-A- 2000 184 786
- JP-A- 2001 025 258
- JP-A- 2009 065 791
- JP-A- 2011 158 170
- JP-A- 2012 016 104
- JP-A- 2012 135 118
- JP-A- 2014 064 448
- US-A1- 2003 052 642

## Description

### TECHNICAL FIELD

The present invention relates to a reduction of an output current noise in an electric power conversion device.

### BACKGROUND ART

A background art of the present technical field is disclosed in JP 2009-303288 A (Patent Document 1). In this publication, "A rotating electric machine control system 10 includes a power storage device 12 serving as a power source circuit, a voltage converter 16, inverters 20 and 22, two rotating electric machines 24 and 26, and a control device 40, and controls power storage of the power storage device 12 from an external power source 60. The control device 40 includes a switching frequency setting unit 50 that sets a plurality of types of carrier frequencies used for drive control of the inverters 20 and 22 and sets a switching frequency of each carrier frequency for each operation condition of the inverter so that a resultant frequency distribution characteristic including a sideband wave of each carrier frequency becomes flat and a carrier frequency switching unit 48 that sequentially switches each carrier frequency during an operation of the inverter in accordance with a set switching frequency." is stated.

### CITATION LIST

### PATENT DOCUMENT

Patent Document 1: JP 2009-303288 A Further, an electric power conversion device from which the pre-characterising part of claim 1 starts out is disclosed in EP 2043 240 A2. Related art is disclosed in EP 1914874 A2, EP 1850465 A2, EP 0413966 A2 and US 2003/0052642 A1.

### SUMMARY OF THE INVENTION

### PROBLEMS TO BE SOLVED BY THE INVENTION

A mechanism of setting a plurality of types of carrier frequencies used for drive control and setting a switching frequency of each carrier frequency for each operation condition of the inverter so that the resultant frequency distribution characteristic including a sideband wave of each carrier frequency becomes flat is disclosed in Patent Document 1.

In the technique disclosed in Patent Document 1, since the resultant frequency distribution characteristic of the carrier frequency becomes flat, a frequency distribution characteristic of noise according to the carrier frequency becomes flat, and quietness is improved, but it is not considered that the intensity of noise felt by humans is not flat as stated in the international standard ISO 226, and a problem and a solution thereof are not mentioned.

It is an object of the present invention to implement noise reduction in which a volume felt by humans is considered using a method of reducing an output current noise in an electric power conversion device.

### SOLUTIONS TO PROBLEMS

The above problem is solved by an electric power conversion device and by a method as set forth in the appended claims. The present application discloses a plurality of constituent elements for solving the above-mentioned problem, and as an example, provided is an electric power conversion device including a carrier frequency setting unit that switches a plurality of carrier frequencies, a carrier frequency restricting unit that restricts carrier frequencies in a predetermined range, a carrier frequency generating unit that generates a carrier frequency used for PMW generation from the carrier frequency setting unit and the carrier frequency restricting unit, a PMW generating unit that generates a PMW output signal using the carrier frequency generated by the carrier frequency generating unit, and an AC converting unit that outputs an AC voltage using the PMW output signal.

### EFFECTS OF THE INVENTION

According to the present invention, it is possible to reduce a noise felt by humans using a method of reducing an output current noise.

### BRIEF DESCRIPTION OF THE DRAWINGS

Fig. 1 is a system configuration diagram using an electric power conversion device according to a first embodiment.
Fig. 2 is a diagram illustrating a simulation of an equal-loudness curve in ISO 226.
Fig. 3 is a flowchart illustrating a carrier frequency variation determination process according to the first embodiment.
Fig. 4 is a flowchart illustrating a carrier frequency restriction operation process according to the first embodiment.
Fig. 5 is a data table used for determining a carrier frequency according to the first embodiment and a second embodiment.
Fig. 6 is a diagram illustrating a carrier frequency setting screen in a carrier frequency setting unit according to the first embodiment.
Fig. 7 is a flowchart illustrating a carrier frequency variation determination process according to the second embodiment.
Fig. 8 is a flowchart illustrating a carrier frequency restriction operation process according to the second embodiment.
Fig. 9 is a data table used for determining a carrier frequency according to a third embodiment.
Fig. 10 is a diagram illustrating a carrier frequency setting screen in a carrier frequency setting unit according to the third embodiment.
Fig. 11 is a data table used for determining a carrier frequency according to a fourth embodiment.

### MODE FOR CARRYING OUT THE INVENTION

Hereinafter, embodiments of the present invention will be described with reference to the appended drawings.

### First embodiment

In the present embodiment, an operation example of preventing an output current noise will be described.

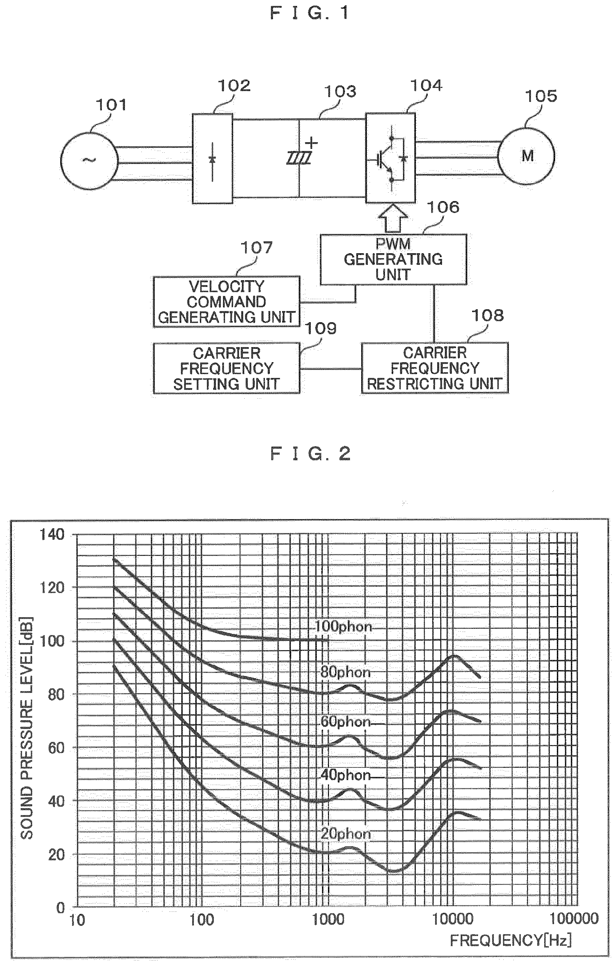

Fig. 1 is an example of a system configuration diagram of an electric power conversion device and an AC motor 105 of the present embodiment. In the present embodiment, a three-phase AC power source 101, a DC converting unit 102, a DC smoothing unit 103, an AC converting unit 104, an AC motor 105, a PMW generating unit 106, a velocity command generating unit 107, a carrier frequency restricting unit 108, and a carrier frequency setting unit 109. Each of the PMW generating unit 106, the velocity command generating unit 107, the carrier frequency restricting unit 108, and the carrier frequency setting unit 109 may be a software process performed by a microcomputer or a hardware processes such as an FPGA.

The three-phase AC power source 101 outputs, for example, a three-phase AC voltage supplied from an electric power company or an AC voltage supplied from a generator to the DC converting unit 102.

For example, the DC converting unit 102 is configured with a DC conversion circuit including a diode or a DC conversion circuit using an IGBT and a flywheel diode, and converts the AC voltage input from the three-phase AC power source 101 into a DC voltage and outputs the DC voltage to the DC smoothing unit 103. In Fig. 1, the DC converting unit including a diode is illustrated.

The DC smoothing unit 103 is a smoothing capacitor, and smooths the DC voltage input from the DC converting unit 102 and outputs the DC voltage to the AC converting unit 104. For example, when an output of the generator is a DC voltage, the DC smoothing unit 103 may receive the DC voltage directly from the generator without intervention of the DC converting unit 102.

For example, the AC converting unit 104 is configured with an AC conversion circuit using an IGBT and a flywheel diode, and receives the DC voltage of the DC smoothing unit 103 and a PMW command of the PMW generating unit 106, converts the DC voltage into an AC voltage, and outputs the AC voltage to the AC motor 105.

The PMW generating unit 106 receives a frequency commands output from the velocity command generating unit 107 and a carrier frequency command output from the carrier frequency restricting unit 108, generates a PMW, and outputs the PMW to the AC converting unit 104.

For example, the velocity command generating unit 107 generates a velocity to be output from an inverter on the basis of a voltage command obtained from the outside or communication data from the outside, and outputs the frequency command to the PMW generating unit 106.

The carrier frequency restricting unit 108 receives a carrier frequency command setting range output from the carrier frequency setting unit 109, and when the carrier frequency is continuously changed with a predetermined step size, the carrier frequency restricting unit 108 determines whether or not the carrier frequency is an output limit value, prevents the carrier frequency to be restricted from being output, and outputs a carrier frequency command to the PMW generating unit 106.

The carrier frequency setting unit 109 is configured with, for example, a storage element or the like, and stores data selected by the user, determines whether or not a carrier frequency restriction mode is enabled, and outputs a preset carrier frequency range to the carrier frequency restricting unit 108 when the carrier frequency restriction mode is enabled. Further, the carrier frequency setting unit 109 includes a manipulating unit and a display unit and may be configured with an external PC or another device.

Next, decision of a carrier frequency restriction range according to the present embodiment will be described. Fig. 2 illustrates data similar to the equal-loudness curve specified in ISO 226. The equal-loudness curve is a curve indicating a size of a sensuous sound when the frequency is changed while keeping a sound strength of a pure tone constant.

Generally, 0.5 kHz to 20 kHz is used as the carrier frequency of the electric power conversion device. Meanwhile, in order to reduce exhaustion of a switching element of the AC converting unit 104, it is desirable to operate at a low carrier frequency, and in order to secure noise reduction and stability of a control characteristic, a relatively high frequency is desirable, and 2 kHz to 6 kHz is often used.

As can be seen from Fig. 2, it is because 2 kHz to 6 kHz is low in a sound pressure level perceived by humans, and particularly, about 3 kHz to 3.5 kHz is a band which is highest in human audibility. In other words, when the electric power conversion device outputs a carrier frequency with a general white noise, even though a sound pressure on a measuring device is constant, a sound of 3 kHz to 3.5 kHz is heard loud. In the present embodiment, the carrier frequency is controlled such that, for example, a carrier frequency component of 2.9 kHz to 3.6 kHz including 3 kHz to 3.5 kHz which is heard loud is not output.

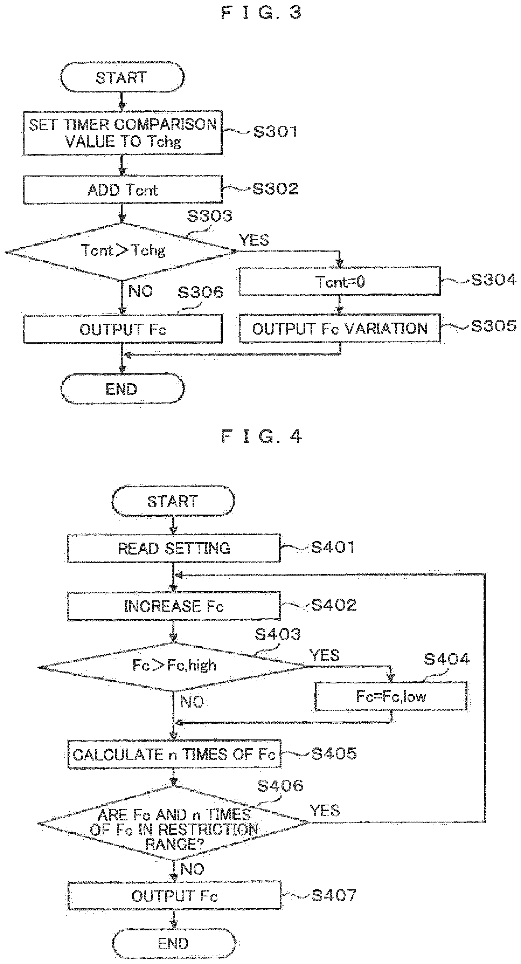

Fig. 3 is a flowchart illustrating a variation determination process for determining whether or not the carrier frequency of the carrier frequency restricting unit 108 is an output limit value.

The carrier frequency restricting unit 108 periodically performs the variation determination process. For example, the carrier frequency restricting unit 108 acquires a timer value for varying the carrier frequency at predetermined time intervals stored in a storage device provided as the carrier frequency setting unit 109, and sets the timer value as a timer comparison value Tchg (S301). The carrier frequency restricting unit 108 adds and updates a period counter Tcnt (S302) and compares the period counter Tcnt with the timer comparison value Tchg (S303), and if the period counter exceeds the timer comparison value, the carrier frequency restricting unit 108 clears the period counter Tcnt to be zero (0) (S304), performs a carrier frequency Fc variation process, and outputs the resulting carrier frequency Fc (S305). If the period counter Tcnt does not exceed the timer comparison value, the carrier frequency restricting unit 108 outputs a carrier frequency Fc of a previous period without varying (S306).

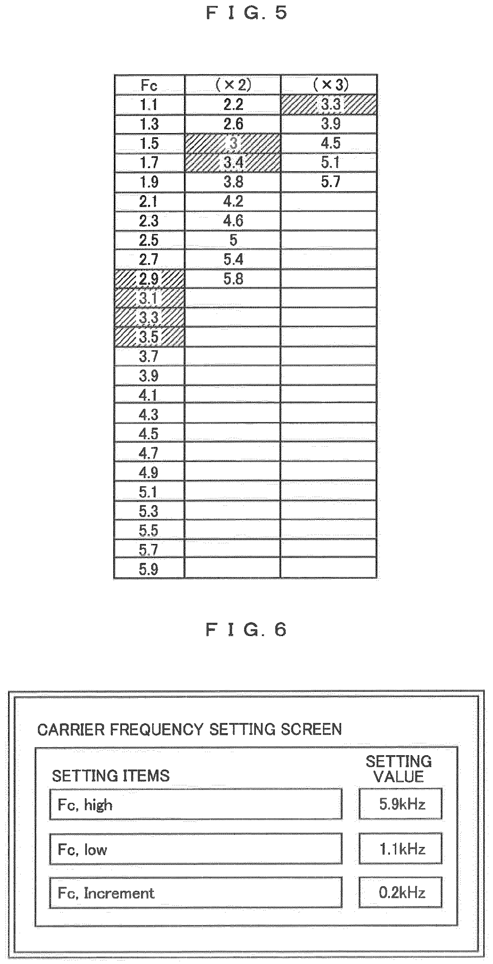

Fig. 4 is a flowchart illustrating the carrier frequency Fc variation process (S305) of Fig. 3 in detail and is a flowchart illustrating a restriction operation process to prevent the output limit value of the carrier frequency. Fig. 5 is a data table used for determining the carrier frequency employed in Fig. 4, a left column Fc indicates a frequency range for varying the carrier frequency Fc, and a (×2) column indicates a frequency which is twice higher than Fc, and (×3) column indicates a frequency which is three times higher than Fc.

In Fig. 4, when the variation process (S305) is necessary in Fig. 3, the carrier frequency restricting unit 108 reads a range for varying, for example, the carrier frequency stored in the storage device provided as the carrier frequency setting unit 109 (S401). In the present embodiment, the range for varying the carrier frequency is set in units of +0.2 kHz from Fc, low = 1.1 kHz which is a minimum value of the carrier frequency Fc illustrated in the left column Fc of Fig. 5 to Fc, high = 5.9 kHz which is a maximum value of the carrier frequency Fc, and the output restriction range is set to 2.9 kHz to 3.5 kHz which is shaded. For example, when the original carrier frequency is 2.3 kHz, the carrier frequency restricting unit 108 adds, for example, 0.2 kHz to Fc to set 2.5 kHz (S402). For example, the carrier frequency restricting unit 108 determines whether or not the addition result is 6.1 kHz and exceeds Fc, high (S403), and sets Fc, low = 1.1 kHz as the carrier frequency if the addition result exceeds Fc, high (S404). The carrier frequency restricting unit 108 calculates n times (n is a positive integer) the set carrier frequency while considering, for example, n = 1, 2, and 3 in the present embodiment (S405), determines whether or not all results are within a range serving as a restriction range, for example, determines whether or not they are within the output restriction range of 2.9 kHz to 3.5 kHz in the present embodiment (S406), and returns to the Fc addition process again when Fc illustrated in Fig. 5 is 1.1 kHz, 1.5 kHz, 1.7 kHz, or 2.9 kHz to 3.5 kHz. In other words, this is because in the case of 1.1 kHz, it becomes 3.3 kHz (shaded part) when multiplied by 3, 1.5 kHz, 1.7 kHz becomes 3 kHz, 3.4 kHz (shaded part) when doubled, and the carrier frequency enters within the output restriction range of 2.9 kHz to 3.5 kHz. If the set carrier frequency is outside the output restriction range, the carrier frequency restricting unit 108 outputs the output value of the carrier frequency to the PWM generating unit 106 (S407).

Fig. 6 is a diagram illustrating a carrier frequency setting screen in the carrier frequency setting unit 109 of the electric power conversion device of the present embodiment. For example, the carrier frequency setting unit of the electric power conversion device is a touch input type display panel and may perform an input and a setting.

In Fig. 6, in the present embodiment, a setting item input screen for the carrier frequency and a setting value input screen for the carrier frequency are provided. The carrier frequency setting items include Fc, high which is the highest value of the carrier frequency, Fc, low which is the smallest value, and a step size Fc, Increment of the carrier frequency, and for example, setting values thereof are 5.9 kHz, 1.1 kHz, and 0.2 kHz, respectively. The inputs may be selected in a pull-down manner. Further, the inputs are set by the user but may be set by default in advance.

As described above, the present embodiment provides an electric power conversion device including a carrier frequency setting unit that switches a plurality of carrier frequencies, a carrier frequency restricting unit that restricts carrier frequencies in a predetermined range, a carrier frequency generating unit that generates a carrier frequency used for PMW generation from the carrier frequency setting unit and the carrier frequency restricting unit, a PMW generating unit that generates a PMW output signal using the carrier frequency generated by the carrier frequency generating unit, and an AC converting unit that outputs an AC voltage using the PMW output signal.

Further, the carrier frequency restricting unit performs the restricting so that the carrier frequencies are not output when the plurality of carrier frequencies and carrier frequency components of n times (n is a positive integer) of the carrier frequencies are the carrier frequencies in the predetermined range.

Further, the carrier frequency setting unit sets a maximum value, a minimum value, and a step size of a carrier frequency range of the plurality of carrier frequencies to be switched.

Further, provided is a method of reducing an output current noise of an electric power conversion device that generates a PMW output signal using a carrier frequency and outputs an AC voltage using the PMW output signal, including varying a carrier frequency used for generation of the PMW output signal periodically by switching a plurality of carrier frequencies and restricting carrier frequencies in a predetermined range among the plurality of carrier frequencies.

Further, provided is an electric power conversion device including a DC converting unit that converts an alternating current (AC) voltage of an AC power source into a direct current (DC) voltage, a DC smoothing unit that smooths the DC voltage, a PMW generating unit that generates a PMW output signal using a carrier frequency, an AC converting unit that converts the smoothed DC voltage into an AC voltage using the PMW output signal and outputs the AC voltage, and a manipulating unit that inputs various kinds of settings to the electric power conversion device, in which the manipulating unit has a setting item input screen for the carrier frequency and a setting value input screen for the carrier frequency.

Further, the manipulating unit includes an input setting screen for a maximum value and a minimum value of a carrier frequency variation range and a step size of the carrier frequency as setting items for the carrier frequency.

Accordingly, it is possible to reduce the output current noise and reduce the sound generated in the AC motor.

### Second embodiment

In the present embodiment, an operation example of restricting the output current noise will be described.

The present embodiment is a modified example of the first embodiment, parts common to the first embodiment are denoted by the same reference numerals, and different parts will be described in detail.

A system configuration diagram of the electric power conversion device and the AC motor of the present embodiment is similar to that of Fig. 1 of the first embodiment, but in the present embodiment, an operation of the carrier frequency restricting unit 108 is different from that of the first embodiment.

The carrier frequency restricting unit 108 of the present embodiment receives the carrier frequency command setting range output from the carrier frequency setting unit 109, and when the carrier frequency is continuously changed with a predetermined step size, the carrier frequency restricting unit 108 determines whether or not the carrier frequency is an output limit value, reduces a component of a sound corresponding to the carrier frequency in the restriction range by reducing an output period of the carrier frequency in the output restriction range to be smaller than that of the frequency which is not subject to the output restriction when the carrier frequency is within the output restriction range, and outputs the carrier frequency command to the PMW generating unit 106.

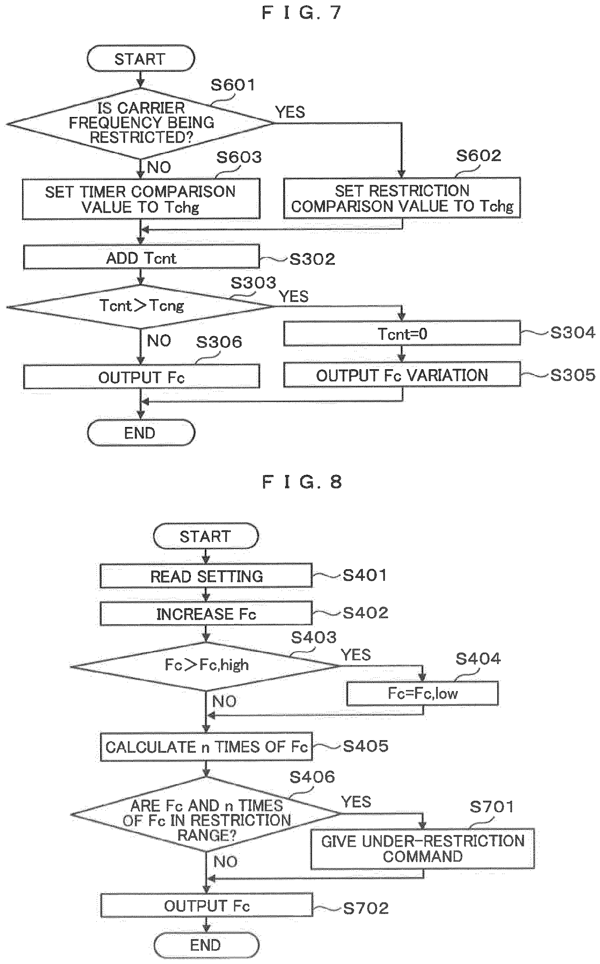

Fig. 7 is a flowchart illustrating a variation determination process of determining whether or not the carrier frequency of the carrier frequency restricting unit 108 is the output limit value. Fig. 7 is a flowchart in which S301 of Fig. 3 is replaced with S601 to S603, and the other parts are the same as those of Fig. 3 and denoted by the same reference numerals.

In Fig. 7, for example, the carrier frequency restricting unit 108 determines whether or not the carrier frequency to be output is determined to be within 2.9 kHz to 3.5 kHz which is a predetermined output restriction range using a flag indicating that the output restriction is being performed to be described later (S601), and when the output restriction is being performed, the carrier frequency restricting unit 108 sets a value smaller than the timer comparison value in Tchg as the restriction comparison value (S602). If the carrier frequency is not the limit value, the timer comparison value is set in Tchg. For example, the restriction comparison value is set to 1 cycle 10 ms, and the timer comparison value is set to 5 cycles 50 ms. A subsequent process is similar to that of Fig. 1 of the first embodiment, and thus description thereof is omitted.

Fig. 8 is a flowchart illustrating the carrier frequency Fc variation process (S305) of Fig. 7 in detail and is a flowchart illustrating the restriction operation process of limiting the output limit value of the carrier frequency. Fig. 8 is a flowchart in which S407 of Fig. 4 is replaced with S701 and S702, and the other parts are the same as those of Fig. 4 and denoted by the same reference numerals.

In Fig. 8, the carrier frequency restricting unit 108 performs a process when the variation process (S305) is necessary in Fig. 8, and a process of S401 to S406 is similar to that of Fig. 4, and thus description thereof is omitted. In S406, the carrier frequency restricting unit 108 determines whether or not the carrier frequency Fc and n times thereof (n is a positive integer) are within the range of, for example, the output restriction range of 2.9 kHz to 3.5 kHz, and when Fc illustrated in Fig. 5 is 1.1 kHz, 1.5 kHz, 1.7 kHz, and 2.9 kHz to 3.5 kHz, the carrier frequency restricting unit 108 sets the flag to indicate that the output restriction is being performed and gives a command to an operation for determination in S601 of Fig. 7 (S701) . If the set carrier frequency is outside the output restriction range, the set carrier frequency is output to the PWM generating unit 106 as the output value of the carrier frequency (S702).

As described above, in the present embodiment, when a plurality of carrier frequencies and carrier frequency components of n times (n is a positive integer) of the carrier frequencies are carrier frequencies in a predetermined range, the carrier frequency restricting unit performs control such that the carrier frequencies are output in a shorter period than a period of carrier frequencies in a range other than the predetermined range.

As a result, when the output frequency is the carrier frequency of the output restriction range, it is possible to reduce the component of the sound corresponding to the carrier frequency of the output restriction range and reduce the output current noise by shortening the output period or lowering the output frequency, and it is possible to reduce a sound generated in the AC motor.

### Third embodiment

The present embodiment is a modified example of the first embodiment, parts common to the first embodiment are denoted by the same reference numerals, and different parts will be described in detail.

A system configuration diagram of the electric power conversion device and the AC motor of the present embodiment is similar to that of Fig. 1 of the first embodiment, but in the present embodiment, operations of the carrier frequency restricting unit 108 and the carrier frequency setting unit 109 are different from those of the first embodiment.

The carrier frequency restricting unit 108 of the present embodiment receives a carrier frequency pattern output from the carrier frequency setting unit 109, intermittently changes it in accordance with the frequency set in the carrier frequency setting unit, and outputs the carrier frequency command to the PMW generating unit 106.

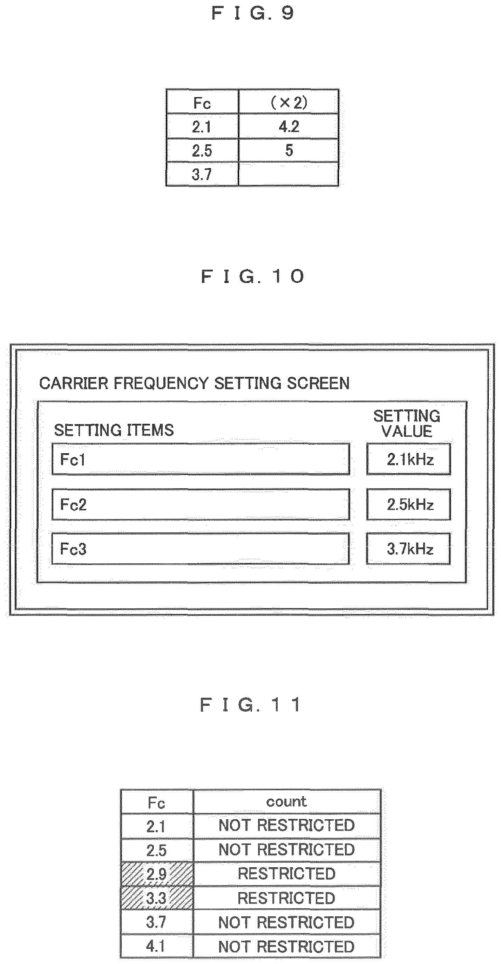

The carrier frequency setting unit 109 is configured with, for example, a storage element or the like, and stores data selected by the user, determines whether or not a carrier frequency restriction mode is enabled, and outputs a preset carrier frequency pattern, for example, three predetermined carrier frequency patterns as illustrated in Fig. 9 to the carrier frequency restricting unit 108 as some carrier frequencies in Fig. 5 which are not subject to the output restrict and are used in the first embodiment when the carrier frequency restriction mode is enabled.

In the present embodiment, as illustrated in Fig. 3, the timer comparison value is set, and the carrier frequency is changed in accordance with the carrier frequency pattern in S305, and thus the output current noise is reduced, and the sound generated in the AC motor is reduced.

In other words, in the present embodiment, instead of setting the variation range and the step size of the carrier frequency Fc as illustrated in Fig. 5, it is possible to reduce output current noise and reduce the sound generated in the AC motor by preparing the frequency pattern of the carrier frequency Fc in which the frequency under the output restriction is excluded in advance and preventing the carrier frequency causing the output current noise.

Fig. 10 is a diagram illustrating a carrier frequency setting screen in the carrier frequency setting unit 109 of the electric power conversion device of the present embodiment. In Fig. 10, in the present embodiment, a setting item input screen for the carrier frequency and a setting value input screen for the carrier frequency are provided. The carrier frequency setting item is a change frequency pattern of the carrier frequency, and frequencies which correspond in number to frequencies to be changed can be set. In the present embodiment, three carrier frequencies Fc1, Fc2, and Fc3 are set, and for example, setting values thereof are 2.1 kHz, 2.5 kHz, and 3.7 kHz, respectively. The inputs may be selected in a pull-down manner. Further, the inputs are set by the user but may be set by default in advance.

As described above, in the present embodiment, the carrier frequency setting unit sets a plurality of carrier frequencies preset as a plurality of carrier frequencies to be switched.

The manipulating unit that inputs various kinds of settings to the electric power conversion device includes an input setting screen in which it is possible to set carrier frequencies which correspond in number to frequencies to be changed among the carrier frequencies as the carrier frequency setting item.

### Fourth embodiment

The present embodiment is a modified example of the second embodiment, parts common to the second embodiment are denoted by the same reference numerals, and different parts will be described in detail.

A system configuration diagram of the electric power conversion device and the AC motor of the present embodiment is similar to that of Fig. 1 described in the second embodiment, but in the present embodiment, operations of the PMW carrier frequency restricting unit 108 and the carrier frequency setting unit 109 are different from those of the second embodiment.

The carrier frequency restricting unit 108 of the present embodiment receives a carrier frequency pattern output from the carrier frequency setting unit 109, intermittently changes it in accordance with the frequency set in the carrier frequency setting unit, and outputs the carrier frequency command to the PMW generating unit 106.

The carrier frequency setting unit 109 is configured with, for example, a storage element or the like, and stores data selected by the user, determines whether or not a carrier frequency restriction mode is enabled, and outputs a preset carrier frequency pattern, for example, six predetermined carrier frequency patterns as illustrated in Fig. 11 (a Fc column of Fig. 11) and information indicating "output restriction" or "non restriction" (a count column of Fig. 11) to the carrier frequency restricting unit 108 when the carrier frequency restriction mode is enabled.

In the present embodiment, similarly to the second embodiment, as illustrated in Figs. 7 and 8, if the output frequency is the carrier frequency of the output restriction range, it is possible to reduce the component of the sound corresponding to the carrier frequency of the output restriction range, reduce the output current noise, and reduce the sound generated in the AC motor by setting a short period as the output period.

The present invention is not limited to the above-described embodiments and includes various modified examples. For example, the carrier frequency variation method described in the present embodiment is an example, and the content of the present invention can be applied as long as it is a method of outputting a plurality of carrier frequencies while changing the carrier frequency continuously or intermittently. Further, for example, the timer comparison value of the present embodiment may be set differently for each carrier frequency. Further, for example, the output restriction range of the carrier frequency of the present embodiment may be changed. Further, for example, the output restriction range of the carrier frequency of the present embodiment may be changed, and the restriction range may be changed accordingly.

For example, the above embodiments have been described to facilitate understanding of the present invention, and the present invention is not limited to a configuration necessarily including all components described above. A component of a certain embodiment may be replaced with a component of another embodiment, or a configuration of another embodiment may be added to a configuration of a certain embodiment. Further, some of the components of each embodiment can be added, deleted, or replaced with other components of another embodiment.

Furthermore, some or all of components, functions, processing units, processing devices, or the like described above may be implemented by hardware, for example, may be designed by an integrated circuit. Further, components, functions, and the like described above may be implemented by software by interpreting and executing a program for implementing the functions through a processor. Information such as a program, a table, or a file of implementing each function may be stored in a recording device such as a memory, a hard disk, or a solid state drive (SSD) or a recording medium such as an IC card, an SD card, or a DVD.

Furthermore, in the above-described embodiment, a control line or an information line are illustrated since they are necessary for description, and all control lines or information lines necessary in a product are not necessarily illustrated. Practically, almost all the components may be connected to one another.

### REFERENCE SIGNS LIST

- 101: three-phase AC power source
- 102: DC converting unit
- 103: DC smoothing unit
- 104: AC converting unit
- 105: AC motor
- 106: PMW generating unit
- 107: velocity command generating unit
- 108: carrier frequency restricting unit
- 109: carrier frequency setting unit

## Claims

1. An electric power conversion device for generating a PWM output signal using a carrier frequency and outputting an AC voltage using the PWM output signal, comprising:
a carrier frequency setting unit (109) configured to set a plurality of carrier frequencies to be switched for varying the carrier frequency used for generation of the PWM output signal periodically;
a carrier frequency restricting unit (108) configured to restrict carrier frequencies;
a carrier frequency generating unit configured to generate the carrier frequency used for PWM generation from an output of the carrier frequency setting unit (109) and the carrier frequency restricting unit (108);
a PWM generating unit (106) configured to generate the PWM output signal using the carrier frequency generated by the carrier frequency generating unit; and
an AC converting unit (104) configured to output the AC voltage using the PWM output signal,
**characterised in that** the carrier frequency restricting unit (108) is configured to determine for each of the plurality of set carrier frequencies whether or not any of its frequency and its frequency components of n times its frequency, with n being a positive integer, is in a predetermined range and, if not, output the carrier frequency whereas, if yes, do not output the carrier frequency or output it for a shorter period than the period of carrier frequencies outside said predetermined range, in order to reduce an output current noise of the electric power conversion device.

2. The electric power conversion device according to claim 1,
wherein the carrier frequency setting unit (109) sets a maximum value, a minimum value, and a step size of a carrier frequency range of the plurality of carrier frequencies to be switched.

3. The electric power conversion device according to claim 1,
wherein the carrier frequency setting unit (109) sets a plurality of carrier frequencies preset as the plurality of carrier frequencies to be switched.

4. A method of reducing an output current noise of an electric power conversion device that generates a PWM output signal using a carrier frequency and outputs an AC voltage using the PWM output signal, comprising:
varying a carrier frequency used for generation of the PWM output signal periodically by switching a plurality of carrier frequencies having been set, and
restricting carrier frequencies in a predetermined range among the plurality of carrier frequencies, by determining for each of the plurality of set carrier frequencies whether or not any of its frequency and its frequency components of n times its frequency, with n being a positive integer, is in said predetermined range and, if not, outputting the carrier frequency for generation of the PWM output signal whereas, if yes, not outputting the carrier frequency or outputting it for a shorter period than the period of carrier frequencies outside said predetermined range.

5. The method of reducing the output current noise of the electric power conversion device according to claim 4,
wherein for the plurality of carrier frequencies to be switched, a maximum value, a minimum value, and a step size of a carrier frequency range of the plurality of carrier frequencies are set.

6. The method of reducing the output current noise of the electric power conversion device according to claim 4,
wherein the plurality of carrier frequencies to be switched are decided in accordance with a plurality of preset carrier frequencies.

7. An electric power conversion device in accordance with claim 1, comprising:
a DC converting unit (102) that converts an alternating current (AC) voltage of an AC power source into a direct current (DC) voltage;
a DC smoothing unit (103) that smoothes the DC voltage;
the AC converting unit (104) that converts the smoothed DC voltage into the AC voltage using the PWM output signal, and outputs the AC voltage; and
a manipulating unit that inputs various kinds of settings to the electric power conversion device,
wherein the manipulating unit has a setting item input screen for the carrier frequency and a setting value input screen for the carrier frequency.

8. The electric power conversion device according to claim 7,
wherein the manipulating unit includes an input setting screen for a maximum value and a minimum value of a carrier frequency variation range and a step size of the carrier frequency as setting items for the carrier frequency.

9. The electric power conversion device according to claim 7,
wherein the manipulating unit includes an input setting screen in which frequencies corresponding in number to frequencies to be changed among the carrier frequencies are able to be set as a setting item for the carrier frequency.

## Patentansprüche

1. Elektrische Leistungswandlungsvorrichtung zum Erzeugen eines PWM-Ausgangssignals unter Verwendung einer Trägerfrequenz und zum Ausgeben einer Wechselspannung unter Verwendung des PWM-Ausgangssignals, umfassend:
eine Trägerfrequenz-Festlegungseinheit (109) zum Festlegen mehrerer Trägerfrequenzen, die zum Verändern der zum Erzeugen des PWM-Ausgangssignals verwendeten Trägerfrequenz periodisch umzuschalten sind;
eine Trägerfrequenz-Einschränkungseinheit (108) zum Einschränken von Trägerfrequenzen;
eine Trägerfrequenz-Erzeugungseinheit zum Erzeugen der zur PWM-Erzeugung verwendeten Trägerfrequenz aus einer Ausgabe der Trägerfrequenz-Festlegungseinheit (109) und der Trägerfrequenz-Einschränkungseinheit (108);
eine PWM-Erzeugungseinheit (106) zum Erzeugen des PWM-Ausgangssignals unter Verwendung der von der Trägerfrequenz-Erzeugungseinheit erzeugten Trägerfrequenz; und
eine Wechselstrom-Wandeleinheit (104) zum Ausgeben der Wechselspannung unter Verwendung des PWM-Ausgangssignals,
**dadurch gekennzeichnet, dass**
die Trägerfrequenz-Einschränkungseinheit (108) eingerichtet ist, für jede der festgelegten Trägerfrequenzen zu bestimmen, ob von ihrer Frequenz und ihren Frequenzkomponenten mit n mal ihrer Frequenz, wobei n eine positive ganze Zahl ist, irgendeine in einem vorbestimmten Bereich liegt, und dann wenn dies nicht der Fall ist, die Trägerfrequenz auszugeben, wohingegen dann wenn dies der Fall ist, die Trägerfrequenz nicht auszugeben oder sie für eine kürzere Zeitspanne als Trägerfrequenzen außerhalb des vorbestimmten Bereichs auszugeben, um einen Ausgangsstrom-Störpegel der elektrischen Leistungswandlungsvorrichtung zu reduzieren.

2. Elektrische Leistungswandlungsvorrichtung nach Anspruch 1,
wobei die Trägerfrequenz-Festlegungseinheit (109) einen Maximalwert, einen Minimalwert und eine Schrittgröße eines Trägerfrequenzbereichs für die umzuschaltenden Trägerfrequenzen festlegt.

3. Elektrische Leistungswandlungsvorrichtung nach Anspruch 1,
wobei die Trägerfrequenz-Festlegungseinheit (109) mehrere vorbestimmte Trägerfrequenzen für die umzuschaltenden Trägerfrequenzen festlegt.

4. Verfahren zum Reduzieren eines Ausgangsstrom-Störpegels einer elektrischen Leistungswandlungsvorrichtung, die unter Verwendung einer Trägerfrequenz ein PWM-Ausgangssignal erzeugt und unter Verwendung des PWM-Ausgangssignals eine Wechselspannung ausgibt, umfassend:
periodisches Ändern einer zum Erzeugen des PWM-Ausgangssignals verwendeten Trägerfrequenz durch Umschalten mehrerer festgelegter Trägerfrequenzen, und
Einschränken von Trägerfrequenzen in einem vorbestimmten Bereich unter den mehreren Trägerfrequenzen, indem für jede der festgelegten Trägerfrequenzen bestimmt wird, ob von ihrer Frequenz und ihren Frequenzkomponenten mit n mal ihrer Frequenz, wobei n eine positive ganze Zahl ist, irgendeine in dem vorbestimmten Bereich liegt, und dann wenn dies nicht der Fall ist, die Trägerfrequenz zum Erzeugen des PWM-Ausgangssignals ausgegeben wird, wohingegen dann wenn dies der Fall ist, die Trägerfrequenz nicht ausgegeben wird oder sie für eine kürzere Zeitspanne als Trägerfrequenzen außerhalb des vorbestimmten Bereichs ausgegeben wird.

5. Verfahren zum Reduzieren des Ausgangsstrom-Störpegels einer elektrischen Leistungswandlungsvorrichtung nach Anspruch 4,
wobei für die mehreren umzuschaltenden Trägerfrequenzen ein Maximalwert, ein Minimalwert und eine Schrittweite eines Trägerfrequenzbereichs der mehreren Trägerfrequenzen festgelegt werden.

6. Verfahren zum Reduzieren des Ausgangsstrom-Störpegels einer elektrischen Leistungswandlungsvorrichtung nach Anspruch 4,
wobei die mehreren umzuschaltenden Trägerfrequenzen entsprechend mehrerer vorbestimmter Trägerfrequenzen festgelegt werden.

7. Elektrische Leistungswandlungsvorrichtung nach Anspruch 1, umfassend:
eine Gleichstrom-Wandeleinheit (102) zum Wandeln einer Wechselspannung (AC) einer Wechselspannungsquelle in eine Gleichspannung (DC);
eine Gleichstrom-Glätteinheit (103) zum Glätten der Gleichspannung;
eine Wechselstrom-Wandeleinheit (104) zum Wandeln der geglätteten Gleichspannung in die Wechselspannung unter Verwendung des PWM-Ausgangssignals und zum Ausgeben der Wechselspannung; und
eine Manipulationseinheit zum Eingeben verschiedener Festlegungen für die elektrische Leistungswandlungsvorrichtung,
wobei die Manipulationseinheit einen Festlegungsgegenstands-Eingabeschirm für die Trägerfrequenz und einen Festlegungswert-Eingabeschirm für die Trägerfrequenz aufweist.

8. Elektrische Leistungswandlungsvorrichtung nach Anspruch 7,
wobei die Manipulationseinheit einen Eingabefestlegungsschirm für einen Maximalwert und einen Minimalwert eines Trägerfrequenz-Änderungsbereichs sowie eine Schrittgröße der Trägerfrequenz als Festlegungsgegenstände für die Trägerfrequenz enthält.

9. Elektrische Leistungswandlungsvorrichtung nach Anspruch 7,
wobei die Manipulationseinheit einen Eingabefestlegungsschirm enthält, in dem als Festlegungsgegenstand für die Trägerfrequenz Frequenzen festgelegt werden können, die in ihrer Zahl wechselbaren Frequenzen unter den Trägerfrequenzen entsprechen.

## Revendications

1. Dispositif de conversion de puissance électrique pour générer un signal de sortie PWM en utilisant une fréquence porteuse et délivrer une tension alternative en utilisant le signal de sortie PWM, comprenant :
une unité de réglage de fréquence porteuse (109) conçue pour définir une pluralité de fréquences porteuses à commuter pour faire varier périodiquement la fréquence porteuse utilisée pour la génération du signal de sortie PWM ;
une unité de restriction de fréquence porteuse (108) conçue pour restreindre les fréquences porteuses ;
une unité de génération de fréquence porteuse conçue pour générer la fréquence porteuse utilisée pour la génération de PWM à partir d'une sortie de l'unité de réglage de fréquence porteuse (109) et de l'unité de restriction de fréquence porteuse (108) ;
une unité de génération de PWM (106) conçue pour générer le signal de sortie PWM en utilisant la fréquence porteuse générée par l'unité de génération de fréquence porteuse ; et
une unité de conversion en CA (104) conçue pour délivrer la tension alternative en utilisant le signal de sortie PWM,
**caractérisé en ce que**
l'unité de restriction de fréquence porteuse (108) est conçue pour déterminer pour chacune de la pluralité de fréquences porteuses définies si oui ou non l'une de sa fréquence et ses composantes de fréquence de n fois sa fréquence, avec n étant un nombre entier positif, se trouve dans une plage prédéterminée et, si ce n'est pas le cas, émettre la fréquence porteuse tandis que, si c'est le cas, ne pas émettre la fréquence porteuse ou l'émettre pendant une période plus courte que la période des fréquences porteuses en dehors de ladite plage prédéterminée, afin de réduire un bruit de courant de sortie du dispositif de conversion de puissance électrique.

2. Dispositif de conversion de puissance électrique selon la revendication 1,
dans lequel l'unité de réglage de fréquence porteuse (109) définit une valeur maximale, une valeur minimale et une taille de pas d'une plage de fréquences porteuses de la pluralité de fréquences porteuses à commuter.

3. Dispositif de conversion de puissance électrique selon la revendication 1,
dans lequel l'unité de réglage de fréquence porteuse (109) définit une pluralité de fréquences porteuses prédéfinies comme la pluralité de fréquences porteuses à commuter.

4. Procédé de réduction d'un bruit de courant de sortie d'un dispositif de conversion de puissance électrique qui génère un signal de sortie PWM en utilisant une fréquence porteuse et délivre une tension alternative en utilisant le signal de sortie PWM, comprenant :
faire varier périodiquement une fréquence porteuse utilisée pour la génération du signal de sortie PWM par commutation d'une pluralité de fréquences porteuses ayant été définies, et
restreindre les fréquences porteuses dans une plage prédéterminée parmi la pluralité de fréquences porteuses, par détermination pour chacune de la pluralité de fréquences porteuses définies si oui ou non l'une de sa fréquence et ses composantes de fréquence de n fois sa fréquence, avec n étant un nombre entier positif, se situe dans ladite plage prédéterminée et, si ce n'est pas le cas, émettre la fréquence porteuse pour la génération du signal de sortie PWM alors que, si c'est le cas, ne pas émettre la fréquence porteuse ou l'émettre pendant une période plus courte que la période des fréquences porteuses en dehors de ladite plage prédéterminée.

5. Procédé de réduction du bruit de courant de sortie du dispositif de conversion de puissance électrique selon la revendication 4,
dans lequel pour la pluralité de fréquences porteuses à commuter, une valeur maximale, une valeur minimale et une taille de pas d'une plage de fréquences porteuses de la pluralité de fréquences porteuses sont définies.

6. Procédé de réduction du bruit de courant de sortie du dispositif de conversion de puissance électrique selon la revendication 4,
dans lequel la pluralité de fréquences porteuses à commuter sont décidées en fonction d'une pluralité de fréquences porteuses prédéfinies.

7. Dispositif de conversion de puissance électrique selon la revendication 1, comprenant :
une unité de conversion en CC (102) qui convertit une tension de courant alternatif (CA) d'une source d'alimentation CA en une tension de courant continu (CC) ;
une unité de lissage CC (103) qui lisse la tension continue ;
l'unité de conversion en CA (104) qui convertit la tension continue lissée en tension alternative en utilisant le signal de sortie PWM et délivre la tension alternative ; et
une unité de manipulation qui entre divers types de paramètres dans le dispositif de conversion d'énergie électrique,
dans lequel l'unité de manipulation a un écran d'entrée d'élément de réglage pour la fréquence porteuse et un écran d'entrée de valeur de réglage pour la fréquence porteuse.

8. Dispositif de conversion de puissance électrique selon la revendication 7,
dans lequel l'unité de manipulation comprend un écran de réglage d'entrée pour une valeur maximale et une valeur minimale d'une plage de variation de fréquence porteuse et une taille de pas de la fréquence porteuse comme éléments de réglage pour la fréquence porteuse.

9. Dispositif de conversion de puissance électrique selon la revendication 7,
dans lequel l'unité de manipulation comprend un écran de réglage d'entrée dans lequel les fréquences correspondant en nombre à des fréquences à changer parmi les fréquences porteuses peuvent être définies en tant qu'élément de réglage pour la fréquence porteuse.
